(19) Europäisches Patentamt

European Patent Office

Office européen des brevets

(11) Veröffentlichungsnummer : **0 345 421 B1**

# (12) EUROPÄISCHE PATENTSCHRIFT

(45) Veröffentlichungstag der Patentschrift :
**02.01.92 Patentblatt 92/01**

(51) Int. Cl.⁵ : **E04H 3/26,** B66F 7/06

(21) Anmeldenummer : **89103634.5**

(22) Anmeldetag : **02.03.89**

(54) **Höhenverstellbarer Podestbock für Theaterbühnen.**

(30) Priorität : **09.06.88 DE 8807508 U**

(43) Veröffentlichungstag der Anmeldung :
**13.12.89 Patentblatt 89/50**

(45) Bekanntmachung des Hinweises auf die
Patenterteilung :
**02.01.92 Patentblatt 92/01**

(84) Benannte Vertragsstaaten :
**AT CH DE ES FR GB IT LI SE**

(56) Entgegenhaltungen :
**DE-A- 2 305 145**
**DE-A- 2 941 912**
**DE-U- 7 332 414**
**FR-A- 2 151 497**

(73) Patentinhaber : **Eisenberg, Hans-Jochen**
**Sachsenstrasse 17**
**W-5600 Wuppertal 2 (DE)**

(72) Erfinder : **Eisenberg, Hans-Jochen**
**Sachsenstrasse 17**
**W-5600 Wuppertal 2 (DE)**

(74) Vertreter : **Peerbooms, Rudolf, Dipl.-Phys.**
**Postfach 200 208 Dickmannstrasse 45c**
**W-5600 Wuppertal 2 (DE)**

## Beschreibung

Die Erfindung betrifft einen höhenverstellbaren, rechteckigen Podestbock für Theaterbühnen oder dgl., mit vier eine Plattform abstützenden Scheren, von deren jeweils beiden Scherenschenkeln einer in Längsrichtung der Plattform verfahrbar geführt und arretierbar ist, und mit einer Entriegelungseinrichtung zur Entriegelung der verfahrbaren Scherenschenkel für eine Höhen-Schnellverstellung, so daß bei entriegelten Scherenschenkeln eine Höhen-Schnellverstellung durch Anheben oder Absenken der Plattform von Hand oder durch einen Schnellantrieb durchführbar ist.

Bei einem bekannten derartigen Podestbock (DE-PS 2305145) sind die verfahrbaren Scherenschenkel an Schlitten angelenkt, die an den Längsseitenholmen eines eine Plattform tragenden Oberrahmens geführt sind und federbelastete Rastzapfen tragen, denen an den Längsseitenholmen Rastlöcher zugeordnet sind. Die Rastbolzen können von den Schmalseiten des Podestbockes aus über Bowdenzüge aus den Rastlöchern herausgezogen werden. Für eine Höheneinstellung wird die Plattform an ihren beiden Schmalseiten von zwei Personen — nach Entriegelung der Zapfen — auf die gewünschte neue Höhe gebracht, was sehr rasch ausgeführt werden kann. Allerdings kann die Plattform nur in einer durch die Lochabstände an den Längsseitenholmen vorgegebenen Abstufung höhenverstellt werden.

Durch die DE-PS 2941912 ist ferner ein Podestbock bekannt, der eine sich längs unter der Plattform erstreckende Schraubenspindel mit auf gegenläufigen Gewindeabschnitten laufenden Gewindemutterstücken aufweist, welche in Mitnahmeverbindung mit den oberen Enden der verschiebbaren Scherenschenkel stehen. Die Höhenverstellung erfolgt dort mittels eines elektromotorischen, an die Spindel ankuppelbaren Antriebes, wobei aber die Arretierung der beweglichen Scherenschenkel wiederum mittels federbelasteter, in Löcher der Längsholme einrastende Rastzapfen erfolgt, weshalb auch der dortige Podestbock nur in bestimmten Abstufungen höhenverstellt werden kann. Darüber hinaus verlangen solche Schraubspindeln angesichts ihrer beträchtlichen Gewindesteigung einen elektromotorischen Antrieb. Würde man eine so geringe Gewindesteigung vorsehen, daß die Spindel von Hand gedreht werden kann, würde es sehr zeitaufwendig sein, um einen zusammengeklappten Podestbock beispielsweise auf 1 Meter Höhe zu bringen.

In der DE-U 7332414 ist ein stufenlos höhenverstellbarer Podestbock beschrieben, der an jeder Plattformlängsseite zwei mit gegenläufigem Gewinde versehene Schraubenspindeln aufweist, auf denen jeweils eine Spindelmutter läuft, die starr mit einem verdrehungsfest am Plattformrahmen gehaltenen, längs des Plattformrahmens verschiebbaren Gehäuses verbunden ist, an welches jeweils einer der vier verschiebbaren Scherenschenkel angelenkt ist. Durch Drehen der Schraubenspindeln kann die Höhe des Podestbockes stufenlos verstellt werden, was allerdings bei großen Verstellhöhen sehr zeitraubend ist.

Der Erfindung liegt die Aufgabe zugrunde, einen gattungsgemäßen Podestbock zu schaffen, der einerseits sehr rasch und andererseits auch stufenlos auf beliebige Höhe einstellbar ist.

Die Lösung dieser Aufgabe ist erfindungsgemäß erreicht durch einen zusätzlichen, selbsthaltenden Feinantrieb für die Höheneinstellung, mit dem die verfahrbaren Scherenschenkel in jeder Höheneinstellung mittels der Entriegelungseinrichtung kuppelbar oder entkuppelbar sind und der in gekuppeltem Zustand durch Selbsthaltung die Höheneinstellung des Podestbockes sichert.

Der Podestbock nach der Erfindung kann nach Entriegelung der Scherenschenkel in gewohnter Weise von beispielsweise zwei an den Schmalseiten der Plattform zugreifenden Personen grob auf die gewünschte Höhe eingestellt und arretiert werden, wobei aber nunmehr der Arretiereingriff gleichbedeutend mit einem Ankuppeln an einen Feinantrieb ist, durch den die Scherenschenkel noch feinfühlig verschoben und die Plattform exakt auf die gewünschte Höhe eingestellt werden kann.

Der Erfindung zufolge können dabei die verfahrbaren Scherenschenkel jeweils ein Kupplungsglied mitführen, dem ein antriebsseitiges Gegenkupplungselement zugeordnet ist, welches sich entlang der gesamten Verstellstrecke des Kupplungsgliedes erstreckt und als Arretiereinrichtung für die jeweilige Höheneinstellung ausgebildet ist.

In Weiterentwicklung der Erfindung kann für jede Schere eine gesondert betätigbare Feinantriebseinrichtung vorgesehen werden. Hierdurch ist es möglich, die Plattform des Podestbockes entweder in Längsrichtung oder in Querrichtung schräg zu neigen, um so beispielsweise Höhendifferenzen zwischen rechts und links an den Podestbock angrenzende Bühnenflächen auszugleichen. Das Spiel zwischen den einzelnen Bauteilen des Podestbockes erlaubt im allgemeinen bereits die Fein-Einstellung einer Höhendifferenz sowohl zwischen den Längsrändern der Plattform als auch zwischen den Querenden der Plattform, d.h. also eine Neigungsverstellung in Längs- und Querrichtung. Die Plattform ist somit nach Art einer Taumelplatte verstellbar.

Gemäß einer speziellen Ausführungsform der Erfindung kann vorgesehen werden, daß jede Feinantriebseinrichtung eine parallel zu den Längsseiten des Podestbockes sich erstreckende, ein selbsthemmendes Gewinde aufweisende Spindel umfaßt und daß die Kupplungsglieder jeweils mittels der Entriegelungseinrichtung in das Spindelgewinde ein- bzw. ausrückbare Teilmuttern sind.

2

Da mittels der Spindeln nur verhältnismäßig kurze Verstellwege ausgeführt werden, können diese mit einer geringen, selbsthemmenden Gewindeneigung versehen werden, so daß nunmehr die Spindeln über ein Antriebshandrad oder eine Handkurbel mühelos betätigt werden können.

Nach weiteren Merkmalen der Erfindung kann vorgesehen werden, daß die verschiebbar geführten Teilmuttern jeweils gegen Feder- oder Schwerkraft von den Spindeln zurückziehbar oder abhebbar sind. Als Entriegelungseinrichtung für die Teilmuttern können Bowdenzüge, Seilzüge oder Druck- oder Zuggestänge vorgesehen sein, die zweckmäßigerweise vom Querrand des Podestbockes aus oder von oben durch Durchbrüche der Plattform hindurch mittels Hand- oder Fußhebel bedienbar sind.

Schließlich kann der Erfindung zufolge noch vorgesehen werden, daß die verfahrbaren Scherenschenkel an Schlitten angelenkt sind, welche an den Längsseitenholmen eines die Plattform tragenden Oberrahmens angelenkt sind, welche jeweils von einer der Spindeln durchsetzt sind und in welchen jeweils eine der Teilmuttern angeordnet ist.

Alternativ können die beweglichen Scherenschenkel auch an Längsholmen geführt sein, welche im Bereich des Podestbockfußes oder -fußrahmens angeordnet sind.

Gemäß einer bevorzugten Ausführungsform der Erfindung ist ferner vorgesehen, daß die verfahrbaren Scherenschenkel des Podestbockes, zusätzlich zu ihren Kupplungsgliedern für den Feinantrieb, je einen federbelasteten Rastbolzen mitführen, denen an den Längsseitenholmen des Podestbockes Rastlöcher zugeordnet sind und die über eine zweite, gesondert betätigbare Entriegelungseinrichtung aus den Rastlöchern zurückziehbar sind. Bei dieser bevorzugten Ausführungsform ist also der Podestbock mit zwei Arretierungssystemen für die Höheneinstellung versehen, die beide gelöst sein müssen, um eine Schnell-Höhenverstellung vorzunehmen. Mittels der Rastbolzen-Arretierung kann der Podestbock in einfachster Weise, wie nach dem Stande der Technik (DE-PS 2305145) üblich, in vorbestimmten Höhenstufen eingestellt werden, womit in der Praxis der Mehrzahl der bei einem speziellen Bühnenaufbau geforderten Höheneinstellungen bereits entsprochen werden kann. Ergeben sich, etwa durch Bodenunebenheiten oder durch eine Höhendifferenz gegenüber einer angrenzenden ortsfesten Bühnenrampe, Stolperkanten, werden nunmehr die Kupplungsglieder des Feinantriebes in Eingriff mit den Spindeln gebracht und werden die Rastbolzen aus den Rastlöchern zurückgezogen. Danach kann dann mittels des Feinantriebes der Podestbock stufenlos auf die jeweils gewünschte Höhe oder Neigung eingestellt werden, wonach dann die in die Spindel eingreifenden Kupplungsglieder die Höhenarretierung bewirken.

Zur Vereinfachung der Handhabung ist bei dieser bevorzugten Ausführungsform des Podestbockes vorgesehen, daß mindestens eine der Entriegelungseinrichtungen für die Kupplungsglieder des Feinantriebs, bzw. für die Rastbolzen, in ihrer Entriegelungsstellung festsetzbar ist, bei der die Kupplungsglieder außer Eingriff mit dem antriebsseitigen Gegenkupplungselement sind, bzw. bei der die Rastbolzen aus den Rastlöchern zurückgezogen sind. Dabei hat es sich sowohl in baulicher Hinsicht als auch in der Handhabung als sehr vorteilhaft erwiesen, wenn gemäß weiteren Merkmalen der Erfindung die Entriegelungseinrichtung für die Feinantrieb-Kupplungsglieder aus Bowdenzügen besteht, welche mit einem Sperrklinkenmechanismus verbunden sind, der nach einem ersten Anziehen die Bowdenzüge in der angezogenen Entriegelungsstellung hält und erst nach einem erneuten Anziehen die Bowdenzüge in ihrer Grundstellung zurückkehren läßt. Durch einen solchen Sperrklinkenmechanismus ist es also möglich, den Feinantrieb vollständig außer Funktion zu setzen und also den Podestbock in üblicher Weise stufenweise schnellzuverstellen und mittels der Rastbolzen zu arretieren. Nur im Bedarfsfall wird der Feinantrieb durch erneutes Ziehen seiner zugeordneten Bowdenzüge in Wirkstellung gebracht.

Der Podestbock nach der Erfindung wird im folgenden anhand zweier in der Zeichnung dargestellter Ausführungsbeispiele näher beschrieben, wobei zeigen :

Fig. 1     eine perspektivische Ansicht auf einen Podestbock nach der Erfindung,
Fig. 2     in vergrößerter perspektivischer Darstellung eine der als Kupplungs- und Arretierglied verwendeten Teilmuttern,
Fig. 3     eine abgewandelte Ausführungsform des Podestbockes nach der Erfindung,
Fig. 4     einen teilschnitt gemäß der Schnittlinie IV-IV in Fig. 3,
Fig. 5     einen Teilschnitt gemäß der Schnittlinie V-V in Fig. 4 und
Fig. 6     eine perspektivische Ansicht auf den Klinkenmechanismus VI in Fig. 3.

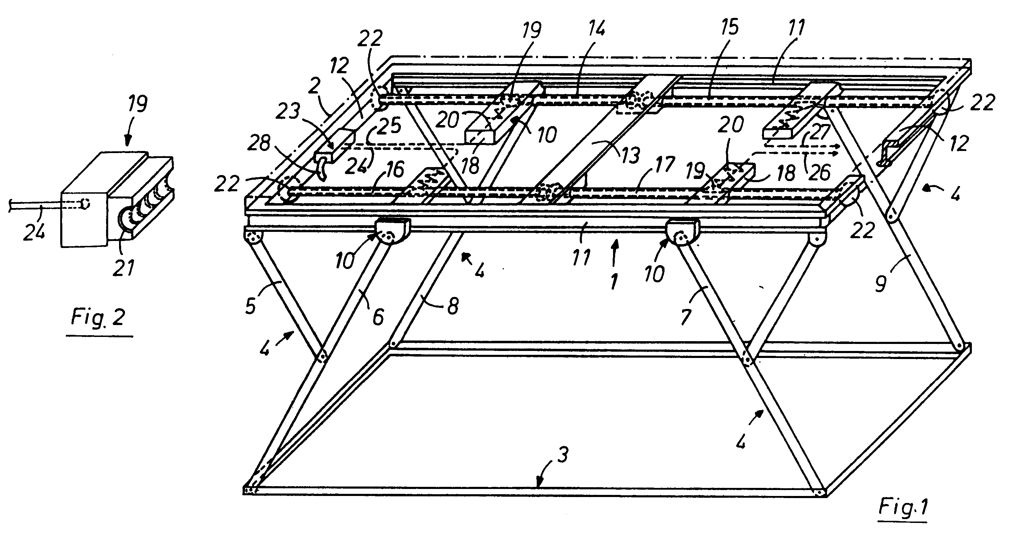

Fig. 1 zeigt einen Podestbock mit einer von einem rechteckigen Oberrahmen 1 getragenen, hier nur strichpunktiert angedeuteten Plattform 2, mit einem gleichgroßen Grundrahmen 3 und mit vier Y-förmigen Scheren 4. Während jeweils der kürzere Scherenschenkel 5 im Bereich einer Ecke des Oberrahmens 1 angelenkt ist, ist der andere Scherenschenkel 6, 7, 8, 9 unten an einer Ecke des Grundrahmens 3 und oben jeweils an einem Schlitten 10 angelenkt. Die Schlitten 10 sind auf Seitenholmen 11 des Oberrahmens 1 verschiebbar. In den

3

beiden Querseitenholmen 12 und an einem Quermittelholm 13 des Oberrahmens 1 sind ferner vier Schraubenspindeln 14, 15, 16, 17 drehbar, aber axial gefesselt, gelagert, die jeweils paarweise fluchten und paarweise eng innen neben den Längsseitenholmen 11 des Podestbockes angeordnet sind. Die Spindeln 14 bis 17 durchsetzen jeweils einen einwärts gerichteten Teil 18 des Schlittens 10. Diese Verlängerungteile 18 beherbergen jeweils ein als Teilmutter 19 ausgebildetes Kupplungsglied, das durch eine ebenfalls im Verlängerungsteil 18 untergebrachte Druckfeder 20 im Gewindeeingriff mit der jeweils zugehörigen Spindel 14, 15, 16, 17 gehalten wird. Die Steigung des Gewindes 21 der Teilmutter 19 und die Steigung der Spindeln 14, 15, 16, 17 ist so gering, daß eine Selbsthemmung gegeben ist und also der Podestbock in jeder Höheneinstellung — bei eingerasteten Teilmuttern 19 — sicher arretiert ist. Durch Drehen der Spindeln mittels ihrer außen, aber noch in dem von der Plattform 1 überdeckten Bereich angeordneten Handräder 22, können die Spindeln einzeln verstellt und damit jeweils eine feinfühlige Höheneinstellung vorgenommen werden, wobei gewünschtenfalls auch eine gewisse Neigung der Plattform eingestellt werden kann.

Für eine größere Höhenverstellung, beispielsweise für ein Zusammenlegen eines vollausgefahrenen Podestbockes, werden die Teilmuttern 19 über von den Schmalseiten des Podestbockes aus betätigbare Entriegelungseinrichtungen 23 gegen die Kraft der Druckfeder 20 von den Spindeln abgezogen, wonach nunmehr die beispielsweise von zwei Personen an den Schmalseiten gegriffene Plattform 2 im "Schnellgang" beliebig auf- und abbewegt werden kann. In der Zeichnung sind als Entriegelungseinrichtungen 23 Bowdenzüge 24, 25, 26, 27 vorgesehen, von denen jeweils zwei Bowdenzüge 24, 25 bzw. 26, 27 über einen gemeinsamen Handhebel 28 gleichzeitig betätigt werden können. In der Zeichnung ist die am rechten Querseitenholm angeordnete Entriegelungseinrichtung nicht gezeigt, sondern dafür das Querschnittsprofil des Oberrahmens 1 veranschaulicht. Wenn die Plattform 2 grob auf die gewünschte Höhe gebracht ist, werden die Bowdenzüge 24 bis 27 losgelassen, so daß die Teilmuttern 19 in ihre Spindeln 14 bis 17 einrasten und die Höheneinstellung arretieren. Die Spindeln 14 bis 17 stellen zusammen mit den ein- und auskuppelbaren Teilmuttern 19 einen Feinantrieb dar, der eine stufenlose Fein-Höheneinstellung erlaubt.

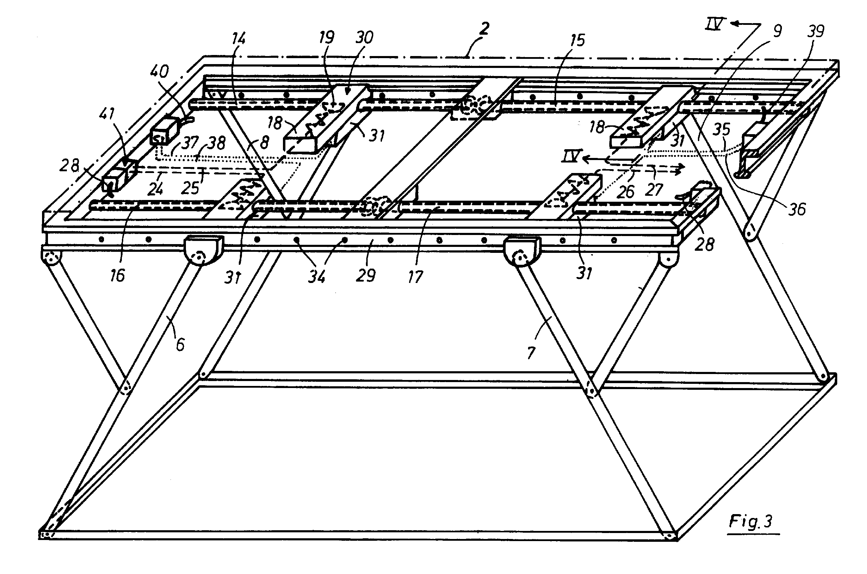

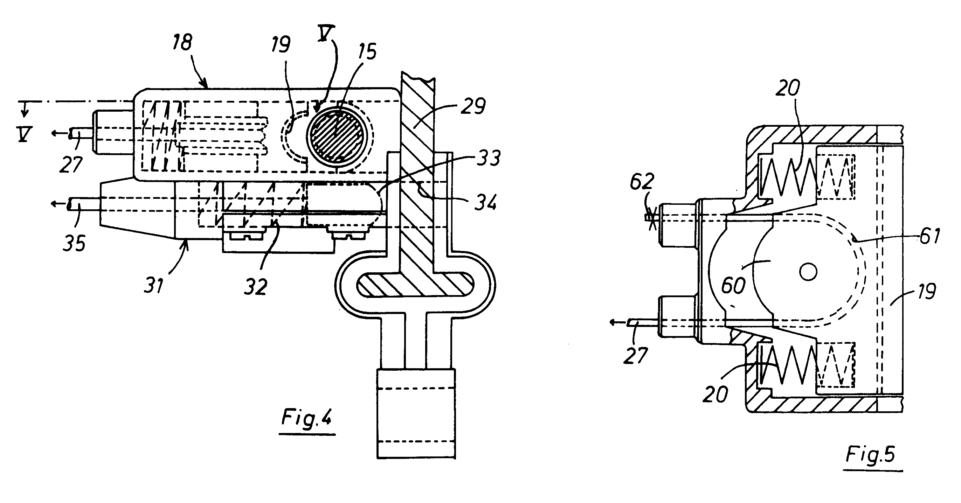

Beim Ausführungsbeispiel nach den Fig. 3 bis 6 enthalten die entlang der Längsholme 29 verfahrbaren Schlitten 30 noch einen unter dem Verlängerungteil 18 liegenden Führungsteil 31 für einen durch eine Druckfeder 32 belasteten Rastbolzen 33, dem an den Längsholmen 29 Rastlöcher 34 zugeordnet sind. Die Rastbolzen 33 sind durch eine Entriegelungseinrichtung, welche die Bowdenzüge 35, 36, 37, 38 umfaßt, die jeweils paarweise über einen Handhebel 39, 40 anziehbar sind, aus de Rastlöchern 34 herausziehbar, und in Fig. 4 ist einer des Rastbolzen 33 in der zurückgezogenen Entriegelungsstellung gezeigt.

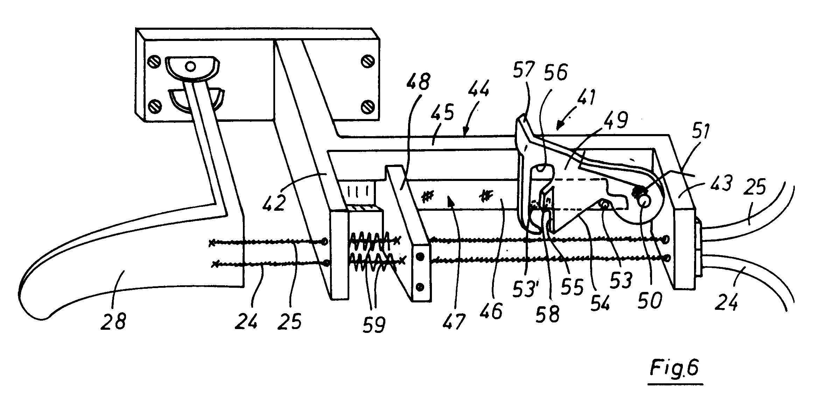

Ferner sind beim Ausführungsbeispiel nach den Fig. 3 bis 6 die Bowdenzugpaare 24, 25 bzw. 26, 27 jeweils mit einem Klinkenmechanimus 41 verbunden, der in Fig. 6 perspektivisch dargestellt ist. Die Seelen der Bowdenzüge 24, 25 sind dort an dem Handhebel 28 befestigt und durchsetzen die U-Schenkel 42, 43 eines etwa U-förmigen Lagerteiles 44, an dessen Bodenschenkel 45 der Längsschenkel 46 eines Winkelstückes verschiebbar gelagert ist, an dessen anderem, parallel zu den beiden U-Schenkeln 42, 43 gerichtetem Querschenkel 48 die Seelen der Bowdenzüge 24, 25 jeweils starr befestigt sind. Nahe des U-Schenkels 43 ist eine Klinke 49 um eine zum Bodenschenkel senkrechte Achse 50 gegen die Kraft einer Schenkelfeder 51 schwenkbar gelagert, wobei die Klinke 49 mit ihrer Rückseite an dem Längsschenkel 46 des Winkelstückes 47 anliegt. Die Lagerung der Klinke 49 ist derart getroffen, daß sie an ihrem vorderen Ende auch ein gewisses Stück weit von dem Längsschenkel 46 gegen die Kraft der Schenkelfeder 51 — in Fig. 6 aus der Darstellungsebene hinaus — abgehoben werden kann. Bei einem ersten Anziehen des Handhebels 28 wird das Winkelstück 47 in Fig. 6 so weit nach links gezogen, daß der an seinem Längsschenkel 46 vorgesehene Riegelstift 53 längs der Klinkenrampe 54 die Klinke anhebt und in die Rastmulde 55 der Klinke 49 einfällt. Bei einem Loslassen des Handhebels 28 bleiben somit die beiden Bowdenzüge 24, 25 angezogen und werden also die Teilmuttern 19 in der in Fig. 4 veranschaulichten Entriegelungsstellung gehalten, bei der sie also nicht in die Spindeln 15 eingreifen. Mittels der an den beiden Querseitenholmen 12 des Podestbockes vorgesehenen Klinkenmechanismen 41 können also die von den Teilmuttern 19 und den Spindeln 14, 15, 16, 17 gebildeten Feinantriebe völlig außer Funktion gesetzt werden, wonach dann unter Anziehen der Handhebel 39, 40 eine rasche Höhenverstellung des Podestbockes auf die gewünschte, durch die Rastlöcher 34 vorgegebene, abgestufte Höheneinstellung vorgenommen werden kann. Die meisten der in der Praxis verlangten Höhenverstellungen beim Aufbau ebener Bühnen oder tribünenförmig ansteigender Bühnen sind — bei geeigneter Lageanordnung der Rastlöcher 34 — schon damit durchführbar. Wenn aber Zwischenhöhen verlangt werden oder wenn sich Stolperkanten aufgrund von Unebenheiten des Aufstellungsbodens oder aufgrund einer Höhendifferenz gegenüber einer angrenzenden stationären Bühne ergeben, kann mittels der Feinantriebe nunmehr auch jede gewünschte Höhenanpassung vorgenommen werden. Hierfür zieht man zunächst erneut die Handhebel 28, wobei der Riegelstift 53 zur Position 53 in den vorderen Klinkenausschnitt 56 gelangt, in der er nicht mehr die Klinke 49 hoch hält, die vielmehr um ihre Achse 50 niederschwenkt, bis sie mit ihrer abgewinkelten oberen Zunge 57 auf dem U-Lagerteil 44 aufliegt. In diesem Augenblick liegt der Verriegelungsstift in der gestrichelt eingezeichneten Stellung 53' unmittelbar vor der etwas nach vorne abgewinkelten Zunge 58 der Klinke. Beim Loslassen der Handhebel 28 werden die Seelen der Bowdenzüge 24, 25 durch die Druckfedern 20 — unterstützt durch die unmittelbar am Winkelstück 47 angreifenden Federn 59 — in Fig. 6 nach rechts bewegt, wobei sie das Winkelstück 47 mitnehmen, dessen Riegelstift 53′ auf die schräggestellte Zunge 58 aufläuft und unter Anheben der Klinke 49 in die Grundstellung 53 gelangt, in der die Bowdenzüge entlastet sind und also die Teilmuttern 19 wieder in Eingriff mit ihren Spindeln 14, 15, 16, 17 gelangen. Sodann werden über die Handhebel 39, 40 die Rastbolzen 33 aus den Rastlöchern 34 herausgezogen, und danach wird durch Drehen der Spindeln 14 bis 17 die gewünschte Feineinstellung vorgenommen. Beim Ausführungsbeispiel nach Fig. 3 besitzen die Spindeln einen Innen- oder Außenmehrkant an ihren Steckenden zum Ansetzen einer entsprechenden Handkurbel.

Wie aus Fig. 5 noch ersichtlich ist, sind die Teil- oder Rastmuttern 19 verhältnismäßig lang ausgebildet und an beiden Längsenden jeweils durch eine Druckfeder 20 belastet. Zwischen den beiden Druckfedern ist in einem Rücken 60 der Teilmutter 19 ein bogenförmiger Kanal 61 ausgebildet, durch den der zugehörige Bowdenzug 27 von außen her eingeschoben werden kann, bis das Bowdenzugende aus der oberen Gehäuseöffnung wieder hervortritt. Das obere Ende 62 wird sodann fixiert. Durch diese Ausbildung ist es bei Riß eines Bowdenzuges 24 bis 27 möglich, diesen auszuwechseln, ohne den Schlitten 30 demontieren zu müssen.

Die Erfindung ist nicht auf die dargestellten Ausführungsbeispiele beschränkt. Z.B. könnten die gezeigten Podestböcke auch auf dem Kopf stehend ausgebildet werden, wobei dann die Plattform 2 vom Oberrahmen 1 abgenommen und auf dem Fußrahmen 3 montiert würde. Anstelle der Bowdenzüge können auch Seilzüge oder Zuggestänge vorgesehen werden.

Stückliste

| | |
|---|---|
| 1 | Oberrahmen |
| 2 | Plattform |
| 3 | Grundrahmen |
| 4 | Scheren |
| 5 | Scherenschenkel |
| 6 | Scherenschenkel |
| 7 | Scherenschenkel |
| 8 | Scherenschenkel |
| 9 | Scherenschenkel |
| 10 | Schlitten |
| 11 | Längsseitenholmen |
| 12 | Querseitenholmen |
| 13 | Quermittelholmen |
| 14 | Schraubenspindel |
| 15 | Schraubenspindel |
| 16 | Schraubenspindel |
| 17 | Schraubenspindel |
| 18 | Verlängerungsteil |
| 19 | Teilmutter |
| 20 | Druckfeder |
| 21 | Gewinde |
| 22 | Handräder |
| 23 | Entriegelungseinrichtungen |
| 24 | Bowdenzug |
| 25 | Bowdenzug |
| 26 | Bowdenzug |
| 27 | Bowdenzug |
| 28 | Handhebel |
| 29 | Längsholm |
| 30 | Schlitten |
| 31 | Führungsteil |
| 32 | Druckfeder |
| 33 | Rastbolzen |
| 34 | Rastlöcher |
| 35 | Bowdenzug |
| 36 | Bowdenzug |

| | |
|---|---|
| 37 | Bowdenzug |
| 38 | Bowdenzug |
| 39 | Handhebel |
| 40 | Handhebel |
| 41 | Klinkenmechanismus |
| 42 | U-Schenkel |
| 43 | U-Schenkel |
| 44 | Lagerteil |
| 45 | Bodenschenkel |
| 46 | Längsschenkel |
| 47 | Winkelstück |
| 48 | Querschenkel |
| 49 | Klinke |
| 50 | Achse |
| 51 | Schenkelfeder |
| 52 | vorderes Ende |
| 53 | Riegelstift |
| 54 | Klinkenrampe |
| 55 | Rastmulde |
| 56 | Klinkenausschnitt |
| 57 | Zunge |
| 58 | Zunge |
| 59 | Federn |
| 60 | Rücken |
| 61 | Kanal |
| 62 | Ende |

**Patentansprüche**

1. Höhenverstellbarer, rechteckiger Podestbock für Theaterbühnen oder dgl., mit vier, eine Plattform (2) abstützenden Scheren (4), von deren jeweils beiden Scherenschenkeln einer in Längsrichtung der Plattform verfahrbar geführt und arretierbar ist, und mit einer Entriegelungseinrichtung zur Entriegelung der verfahrbaren Scherenschenkel (6, 7, 8, 9) für eine Höhen-Schnellverstellung, so daß bei entriegelten Scherenschenkeln eine Höhen-Schnellverstellung durch Anheben oder Absenken der Plattform von Hand oder durch einen Schnellantrieb durchführbar ist, gekennzeichnet durch einen zusätzlichen, selbsthaltenden Feinantrieb (14, 15, 16, 17, 19) für die Höheneinstellung, mit dem die verfahrbaren Scherenschenkel (6, 7, 8, 9) in jeder Höheneinstellung mittels der Entriegelungseinrichtung kuppelbar bzw. entkuppelbar sind und der in gekuppeltem Zustand durch Selbsthaltung die Höheneinstellung des Podestbockes sichert.

2. Podestbock nach Anspruch 1, dadurch gekennzeichnet, daß die verfahrbaren Scherenschenkel (6, 7, 8, 9) jeweils ein Kupplungsglied (Teilmutter 19) mitführen, dem ein antriebsseitiges Gegenkupplungselement (Spindeln 14, 15, 16, 17) zugeordnet ist, welches sich entlang der gesamten Verstellstrecke der Kupplungsglieder (19) erstreckt und als Arretiereinrichtung für die jeweilige Höheneinstellung ausgebildet ist.

3. Podestbock nach den Ansprüchen 1 und 2, dadurch gekennzeichnet, daß für jede Schere (4) eine gesondert betätigbare Feinantriebseinrichtung (14/19 ; 15/19 ; 16/19 ; 17/19) vorgesehen und die Plattform (2) nach Art einer Taumelplatte einstellbar ist.

4. Podestbock nach einem oder mehreren der Ansprüche 1 bis 3, dadurch gekennzeichnet, daß jede Feinantriebseinrichtung eine parallel zu den Längsseiten des Podestbockes sich erstreckende, ein selbsthemmendes Gewinde aufweisende Spindel (14, 15, 16, 17) umfaßt und daß die Kupplungsglieder jeweils eine mittels der Entriegelungseinrichtung (23) in das Spindelgewinde ein- bzw. ausrückbare Teilmutter (19) sind.

5. Podestbock nach einem der Ansprüche 1 bis 4, dadurch gekennzeichnet, daß die Spindeln (14, 15, 16, 17) an ihren Enden jeweils ein Antriebsrad (22) oder ein Steckende zum Ansetzen einer Handkurbel aufweisen.

6. Podestbock nach einem der Ansprüche 1 bis 5, dadurch gekennzeichnet, daß die verschiebbar geführten Teilmuttern (19) jeweils gegen die Kraft einer Feder (20) oder gegen Schwerkraft von den Spindeln (14, 15, 16, 17) zurückziehbar oder abhebbar sind.

7. Podestbock nach Anspruch 6, dadurch gekennzeichnet, daß die Entriegelungseinrichtungen (23) für die Teilmuttern (19) aus Bowdenzügen (24, 25, 26, 27), Seilzügen oder Druck- oder Zuggestängen bestehen, die

EP 0 345 421 B1

von den Querseiten des Podestbockes aus oder von oben durch Durchbrüche der Plattform hindurch mittels Hand- oder Fußhebels bedienbar sind.

8. Podestbock nach einem der Ansprüche 1 bis 7, dadurch gekennzeichnet, daß die verfahrbaren Scherenschenkel (6, 7, 8, 9) an Schlitten (10) angelenkt sind, welche an den Längsseitenholmen (11) eines die Plattform (2) tragenden Oberrahmens (1) angelenkt sind, welche (10) jeweils von einer der Spindeln (14, 15, 16, 17) durchsetzt sind und in welchen (10) jeweils eine der Teilmuttern (19) angeordnet ist.

9. Podestbock nach einem der Ansprüche 1 bis 7, dadurch gekennzeichnet, daß die verfahrbaren Scherenschenkel an Längsholmen geführt sind, welche im Bereich des Podestbockfußes oder -fußrahmens angeordnet sind.

10. Podestbock nach Anspruch 2, dadurch gekennzeichnet, daß seine verfahrbaren Scherenschenkel (6, 7, 8, 9), zusätzlich zu ihren Kupplungsgliedern (Teilmuttern 19) für den Feinantrieb, je einen federbelasteten Rastbolzen (33) mitführen, denen an den Längsseitenholmen (29) des Podestbockes Rastlöcher (34) zugeordnet sind und die über eine zweite, gesondert betätigbare Entriegelungeinrichtung (35 bis 40) aus den Rastlöchern (34) zurückziehbar sind.

11. Podestbock nach Anspruch 10, dadurch gekennzeichnet, daß mindestens eine der Entriegelungseinrichtungen (24 bis 28 bzw. 35 bis 40) für die Kupplungsglieder (Teilmuttern 19) des Feinantriebes, bzw. für die Rastbolzen (33), in ihrer Entriegelungsstellung festsetzbar ist.

12. Podestbock nach Anspruch 11, dadurch gekennzeichnet, daß die Entriegelungseinrichtung (24 bis 28) für die Feinantriebs-Kupplungsglieder (Teilmuttern 19) aus Bowdenzügen (24 bis 28) besteht, welche mit einem Sperrklinkenmechanismus (41) verbunden sind, der nach einem ersten Anziehen die Bowdenzüge in der angezogenen Entriegelungsstellung hält und erst nach einem erneuten Anziehen die Bowdenzüge in ihre Grundstellung zurückkehren läßt.

## Claims

1. Rectangular stage platform for theatres or the like, adjustable in height, equipped with four scissor legs (4), supporting a platform (2), one of the two arms of each of which can be guided back and forth and can be locked and equipped with a locking device for unlocking the mobile scissor legs (6, 7, 8, 9) for quick height adjustment, so that quick height adjustment can be carried out by raising or lowering the platform either manually or with a fast drive, the scissor legs being unlocked, characterised by an additional, self-locking fine drive (14, 15, 16, 17, 19) for the height adjustment, to which the mobile scissor legs (6, 7, 8, 9) can be coupled and decoupled at any height by means of the unlocking device, and which guarantees the height of the platform in a coupled state via self-locking.

2. Stage platform as claimed in Claim 1, characterised in that the mobile legs (6, 7, 8, 9) each carry a coupling member (part nut 19), to which on the side of the drive a counter-coupling element (spindles 14, 15, 16, 17) corresponds, running along the whole adjustment distance of the coupling elements (19) and which is designed as a locking device for each particular height.

3. Stage platform as claimed in Claims 1 and 2, characterised in that for each scissor leg (4) a separately operable fine drive device (14/19 ; 15/19 ; 16/19 ; 17/19) is envisaged, and that the platform (2) can be adjusted in the fashion of a tilting plate.

4. Stage platform as claimed in one or more of Claims 1 to 3, characterised in that each fine drive device comprises spindles (14, 15, 16, 17) running parallel to the longitudinal sides of the platform and having a self-jamming thread, and that the coupling elements are each a part nut (19) which can be shifted with the help of the unlocking device (23) into and out of the spindle thread.

5. Stage platform as claimed in one of Claims 1 to 4, characterised in that the spindles (14, 15, 16, 17) each have at their ends a drive wheel (22) or a stub end to locate a hand-crank.

6. Stage platform as claimed in one of Claims 1 to 5, characterised in that the part nuts (19) which can be guided back and forth, can be withdrawn or lifted from the spindles (14, 15, 16, 17) against the force of a spring (20) or against gravity.

7. Stage platform as claimed in Claim 6, characterised in that the unlocking devices (23) for the part nuts (19) consist of Bowden cables (24, 25, 26, 27,), cable tension devices or pressure- or tension-rods, which can be operated from the transverse sides of the stage platform or from above through openings in the platform with the help of a hand- or foot-lever.

8. Stage platform as claimed in one of Claims 1 to 7, characterised in that the movable scissor legs (6, 7, 8, 9) are attached to runners (10) which are linked to the long-side rails (11) of an upper frame (1) carrying the platform (2) and which are each (10) penetrated by one of the spindles (14, 15, 16, 17) and in each (10) of which one of the part nuts (19) is positioned.

7

9. Stage platform as claimed in one of Claims 1 to 7, characterised in that the movable scissor legs are guided on longitudinal rails, which are positioned in the area of the stage platform base or stage platform frame.

10. Stage platform as claimed in Claim 2, characterised in that its movable scissor legs (6, 7, 8, 9) each carry in addition to their coupling elements (part nuts 19) for the fine drive a spring-loaded latch bolt (33) to which latch holes (34) on the long-side bars (29) of the stage platform correspond, and which can be withdrawn from the latch holes (34) via a second unlocking device (35 to 40), which can be operated separately.

11. Stage platform as claimed in Claim 10, characterised in that at least one of the unlocking devices (24 to 28 and/or 35 to 40) for the coupling elements (part nuts 19) of the fine drive and/or for the latch bolts (33) can be fixed in its unlocking position.

12. Stage platform as claimed in Claim 11, characterised in that the unlocking device (24 to 28) for the fine drive coupling elements (part nuts 19) consists of Bowden cables (24 to 28), which are connected to a click-and-pawl mechanism (41) which holds the Bowden cables in their tightened unlocking position after an initial tightening and allows the Bowden cables to return to their original position only after having been tightened for a second time.


## Revendications

1. Support d'estrade rectangulaire réglable en hauteur, pour scènes de théâtre ou analogues, ayant quatre ciseaux (4), soutenant une plateforme (2), dont chaque groupe de deux branches de ciseaux sont guidées déplaçables en direction longitudinale de la plateforme et susceptibles d'être bloqués, et un dispositif de déverrouillage, pour déverrouiller les branches de ciseaux déplaçables (6, 7, 8, 9) et obtenir un réglage rapide en hauteur, de sorte que lorsque les branches de ciseaux sont déverrouillées, il est possible d'effectuer un réglage rapide en hauteur, par soulèvement ou abaissement de la plateforme à la main ou grâce à un entraînement rapide, caractérisé par un entraînement fin (14, 15, 16, 17, 19) supplémentaire, autobloquant, pour le réglage en hauteur, les branches de ciseaux déplaçables (6, 7, 8, 9) étant susceptibles d'être accouplées, respectivement désaccouplées au moyen du dispositif de déverrouillage, en toute position de réglage en hauteur, et qui bloque le réglage en hauteur du support d'estrade à l'état accouplé, grâce à l'autoblocage.

2. Support d'estrade selon la revendication 1, caractérisé en ce que les branches de ciseaux déplaçables (6, 7, 8, 9) accompagnent chacune un organe de couplage (écrou partiel 19), auquel est associé un contre élément de couplage côté entraînement (broches 14, 15, 16, 17), qui s'étend le long de l'ensemble de la course de réglage des organes de couplage (19) et est réalisé sous forme de dispositif de blocage pour chaque réglage en hauteur.

3. Support d'estrade selon les revendications 1 et 2, caractérisé en ce que, pour chaque ciseau (4) est prévu un dispositif d'entraînement fin actionnable séparément (14/19 ; 15/19 ; 16/19 ; 17/19) et la plateforme (2) étant réglable à la manière d'une plaque culbutante.

4. Support d'estrade selon une ou plusieurs des revendications 1 à 3, caractérisé en ce que chaque dispositif de réglage fin comprend une broche (14, 15, 16, 17) qui s'étend parallèlement aux faces longitudinales du support d'estrade, et en ce que les organes de couplage sont chacun un écrou partiel (19), susceptible d'être avancé ou reculé dans le filetage de la broche, au moyen du dispositif de déverrouillage (23).

5. Support d'estrade selon l'une des revendications 1 à 4, caractérisé en ce que les broches (14, 15, 16, 17) présentent chacune à leurs extrémités une roue d'entraînement (22) ou un embout d'enfichage pour monter une manivelle.

6. Support d'estrade selon l'une des revendications 1 à 5, caractérisé en ce que les écrous partiels (19) guidés déplaçables sont susceptibles d'être rétractés ou soulevés des broches (14, 15, 16, 17), contre la force d'un ressort (20), ou contre la force de la pesanteur.

7. Support d'estrade selon la revendication 6, caractérisé en ce que les dispositifs de déverrouillage (23) pour les écrous partiels (19) sont composés de câbles de Bowden (24, 25, 26, 27), de tronçons de câbles ou de barres de compression et de traction, susceptibles d'être manoeuvrées grâce à des leviers à commande manuelle ou au pied, depuis les côtés transversaux du support d'estrade ou d'en haut, par des passages ménagés dans la plateforme.

8. Support d'estrade selon l'une des revendications 1 à 7, caractérisé en ce que les branches de ciseaux déplaçables (6, 7, 8, 9) sont articulées sur des chariots (10) articulés sur les montants latéraux longitudinaux (11) d'un cadre supérieur (1) qui porte la plateforme (2), qui (10) sont chacun traversés par l'une des broches (14, 15, 16, 17) et dans chacun desquels (10) est disposé l'un des écrous partiels (19).

9. Support d'estrade selon l'une des revendications 1 à 7, caractérisé en ce que les branches de ciseaux déplaçables sont guidés dans des montants longitudinaux disposés dans la zone du pied d'estrade ou du cadre de pied de support d'estrade.

10. Support d'estrade selon la revendication 2, caractérisé en ce que ses branches de ciseaux déplaçables (6, 7, 8, 9) guident chacune conjointement, en plus de leurs organes de couplage (écrous partiels 19) pour l'entraînement fin, un boulon d'arrêt (33) sollicité par un ressort, boulons auxquels sont associés des trous d'encliquetage (34) ménagés sur les montants latéraux longitudinaux (29) du support d'estrade, et qui sont susceptibles d'être dégagés des trous d'encliquetages (34) par l'intermédiaire d'un deuxième dispositif de déverrouillage (35 à 40) à actionnement séparé.

11. Support d'estrade selon la revendication 10, caractérisé en ce qu'au moins l'un des dispositifs de déverrouillage (24 à 28, respectivement 35 à 40) pour les organes de couplage (écrous partiels 19) de l'entraînement fin, respectivement pour les boulons d'arrêt (33), son susceptibles d'être fixés à leur position de déverrouillage,

12. Support d'estrade selon la revendication 11, caractérisé en ce que le dispositif de déverrouillage (24 à 28) pour les organes de couplage d'entraînement fin (écrous partiels 19) se compose de câbles de Bowden (24 à 28) reliés à un mécanisme à cliquet de blocage (41), qui maintient les câbles de Bowden dans la position serrée de déverrouillage, après un premier serrage, et les fait revenir à sa position de base, après un nouveau serrage.

*Fig.1*

*Fig.2*

Fig.3

Fig.5

Fig.4

Fig.6